# EUROPÄISCHE PATENTANMELDUNG

(11) **EP 1 847 751 A1**
(43) Veröffentlichungstag der Anmeldung: **24.10.2007**
(21) Anmeldenummer: 07006469.6
(22) Anmeldetag: 29.03.2007
(51) Int. Cl.: F16L 11/11

(54) **Biegsames Rohr zum Leiten von Fluiden**

(30) Priorität: 21.04.2006 DE 102006018696
(71) Anmelder: LuK Lamellen und Kupplungsbau Beteiligungs KG, 77815 Bühl (DE)
(72) Erfinder: Franco, Filipe, 45800 St Jean de Braye (FR); Crespo, Vincent, 67930 Beinheim (FR)

(57) **Zusammenfassung**

Rohr zum Leiten eines Fluids umfassend mindestens einen flexiblen Abschnitt wobei der mindestens eine flexible Abschnitt aufgrund seiner Form in mehreren verschiedenen Positionen ohne Krafteinwirkung von außen verbleiben kann.

## Beschreibung

Die vorliegende Erfindung befasst sich mit einem Rohr zum Leiten von Fluiden umfassend mindestens einen flexiblen Abschnitt.

In der Pneumatik und/oder Hydraulik werden häufig Rohre als Druckmittelleitungen zum Führen eines gasförmigen oder flüssigen Fluids verwendet. Normalerweise sind solche Rohre aus einem relativ starren, steifen Material gefertigt wie z.B. Metall. Nachteilig bei der Verwendung starrer Rohre ist allerdings der große Arbeits- und Zeitaufwand beim Verlegen, da ein nicht geradliniger Rohrverlauf nur durch arbeitsintensives Zwischenschalten von Fittings wie Bögen, Winkeln, Verschraubungen oder durch die Rohrfestigkeit negativ beeinflussendes lokales Erwärmen und anschließendes Abbiegen des Rohr realisiert werden kann.

Solche Rohre sind im Stand der Technik bekannt. So zeigt DE 36 40 043 A1 ein Rohr, das einen flexiblen bzw. nachgiebigen Biegeabschnitt besitzt, der jeweils zwischen zwei in RohrLängsrichtung aufeinander folgenden, im wesentlichen geradlinigen Rohrlängenabschnitten angeordnet ist und unter Bildung einer gelenkartigen Verbindung mit diesen jeweils einstückig ausgebildet ist. Ein solches Rohr kann nun beliebig abgebogen werden, ohne dass dabei Knicke entstehen. DE 36 40 043 A1 zeigt weiter ein Rohr, das plastisch verbiegbar ist, so dass die einzelnen Biegevorgänge im wesentlichen rückfederungsfrei durchgeführt werden können und das Rohr auch ohne äußere Krafteinwirkung in der jeweiligen Biegestellung bleibt.

Die Aufgabe der vorliegenden Erfindung ist es ein neuartiges flexibles Rohr und/oder Rohrstück bereit zu stellen.

Gelöst wird diese Aufgabe durch den ersten unabhängigen Anspruch 1, insbesondere durch ein Rohr zum Leiten eines Fluids umfassend mindestens einen flexiblen Abschnitt wobei der mindestens eine flexible Abschnitt aufgrund seiner Form in mehreren verschiedenen Positionen ohne Krafteinwirkung von außen verbleiben kann. Das Rohr kann also in verschiedene Stellungen bewegt werden und verbleibt in diesen Stellungen, ohne dass eine Krafteinwirkung über Halterungen oder ähnliches notwendig ist. Diese Selbsthemmung des Rohr geschieht unter anderem oder allein aufgrund der Form des mindestens einen flexiblen Abschnitts. So verspannen sich Teile des Abschnitts gegeneinander und/oder Teile des Abschnitts drücken auf andere Teile des flexiblen Abschnitts und hemmen so den flexiblen Abschnitt in seiner Bewegung.

Bevorzugte Ausführungsbeispiele ergeben sich aus den Unteransprüchen.

Der flexible Abschnitt weist bevorzugt einen runden Querschnitt auf. Er kann jedoch auch ellipsenförmig, rechteckig oder vieleckig ausgebildet sein. Auch sind andere, auch unregelmäßige geometrische Formen denkbar.

Der flexible Abschnitt kann verschieden große Rohrdurchmesser aufweisen. Dies ermöglicht, dass ein oder mehrere Teile des flexiblen Abschnitts, die einen geringeren Rohrdurchmesser aufweisen zumindest teilweise unter einen oder mehrere Teile mit größerem Rohrdurchmesser gebracht werden. Dadurch ist eine Selbsthemmung des flexiblen Abschnitts in verschiedenen Positionen möglich. So ist es nicht notwendig, dass der flexible Abschnitt aus einem plastisch verformbaren Material gebildet ist, was eine Bewegungshemmung erlaubt, vielmehr wird der flexible zumindest auch durch seine Form am Zurückkehren in die Ursprungsform gehindert.

Durch die verschieden großen Rohrdurchmesser ist es möglich, dass sich der flexible Abschnitt ähnlich einer Ziehharmonika verformen, also zusammenziehen und dehnen, aber auch in verschiedene Richtungen biegen lässt.

In einer bevorzugten Ausführungsform weist das Rohr mindestens einen flexiblen Abschnitt auf, der mindestens ein Rohrdurchmessermaximum beinhaltet. Ein Rohrdurchmessermaximum ist dann gegeben, wenn angrenzend an das Rohrdurchmessermaximum die Rohrdurchmesser geringer als beim Rohrdurchmessermaximum sind. Eine solche Form erlaubt zum Beispiel, dass die Seiten die das Rohrdurchmessermaximum begrenzen zueinander bewegt werden können und so die Länge des flexiblen Abschnitts verändert werden kann. Auch können die das Rohrdurchmessermaximum begrenzenden Abschnitte eine tellerartige Verspannung bilden, so dass die Begrenzungen in verschiedenen Positionen verspannt werden können. Dadurch kann der flexible Abschnitt ohne äußere Einwirkung in einer vorbestimmten Position gehalten werden.

In einer weiteren Ausführungsform beinhaltet das Rohr einen flexiblen Abschnitt, der mehrere Rohrdurchmessermaxima aufweist, die durch mindestens ein Rohrdurchmesserminimum getrennt sind.

Sowohl die Rohrdurchmessermaxima als auch die Rohrdurchmesserminima müssen nicht zwingend absolute Extrema bilden. Um die Erfindung auszugestalten genügt es, wenn es sich bei den Extrema um relative Maxima und/oder Minima handelt.

Weist der flexible Abschnitt mehrere Rohrdurchmessermaxima auf, so ist die Bewegungsfreiheit des flexiblen Abschnitts noch weiter vergrößert. Jeder der Rohrdurchmessermaxima kann so ausgebildet sein, dass er eine Veränderung der Länge zulässt bzw. eine Krümmung in mindestens eine Richtung. Dadurch kann durch mehrere durch Minima verbundene Rohrdurchmessermaxima sowohl der flexible Abschnitt noch weiter in der Länge gedehnt werden oder aber auch eine noch weitere Krümmung zugelassen werden.

Durch die Aufeinanderfolge von Rohrdurchmessermaxima und -minima können die Verbindungen zwischen diesen eine, oben schon erwähnte, Vorspannung aufweisen, die es ermöglicht dass eingestellte Positionen auch ohne Krafteinwirkung von außen beibehalten werden.

Insbesondere können mindestens zwei der Rohrdurchmessermaxima den gleichen Rohrdurchmesser aufweisen. Insbesondere können auch alle Rohrdurchmessermaxima denselben Rohrdurchmesser aufweisen. Da insbesondere die Rohrdurchmessermaxima die Außenabmessungen des flexiblen Abschnitts bestimmen, führen gleiche Rohrdurchmesser zu konstanten Außenabmessungen. Dies führt zu einem vereinfachten Einbau, da keine verschiedenen Außenabmessungen berücksichtigt werden müssen. Auch kann bei konstanten Rohrdurchmessermaxima das Rohr entlang der Längsachse symmetrisch ausgebildet sein, so dass das Rohr in beide möglichen Richtungen eingebaut werden kann. Auch dies vereinfacht den Einbau und verhindert Fehler.

Bevorzugt weisen mindestens zwei der Rohrdurchmesserminima den gleichen Rohrdurchmesser auf. Insbesondere können alle Rohrdurchmesserminima denselben Rohrdurchmesser aufweisen. Die Rohrdurchmesserminima begrenzen den Rohrinnendurchmesser. So ist durch die Rohrdurchmesserminima die lichte Weite gegeben, durch die das geleitete Fluid hindurch tritt. Eine gleichmäßige Verteilung von Rohrdurchmesserminima und -maxima gestattet es, dass das Fluid in beide Richtungen gleichförmig geleitet werden kann, so dass für die verschiedenen Richtungen keine unterschiedlichen Verhalten des Fluids berücksichtigt werden muss.

Auch können zwei aufeinander folgende Strecken zwischen einem Rohrdurchmessermaximum und einem Rohrdurchmesserminimum verschieden lang sein. Dies führt zu einer Art Sägezahnmuster. Dieses Sägezahnmuster ermöglicht es, dass die beiden Strecken leichter ineinander greifen, bzw. einfacher verspannt werden können. Dadurch ist eine vorteilhaftere Fixierung in der gewünschten Position möglich.

Bevorzugt kann der flexible Abschnitt gestreckt und verkürzt werden. Neben der Krümmung des flexiblen Abschnitts führt dies zu weiteren Freiheitsgraden und zu einer noch weiter vereinfachten Möglichkeit das Rohr nach der vorliegenden Erfindung zu verlegen.

Auch kann der mindestens eine flexible Abschnitt um seine Längsachse verwunden werden. Dieser zusätzliche Freiheitsgrad, indem der flexible Abschnitt in sich um die Längsachse gedreht werden kann, führt dazu, dass gerade Rohre die nicht um die Längsachse symmetrisch ausgestaltet sind leichter verbaut werden können.

Die Erfindung wird nachfolgend anhand der Zeichnungen näher erklärt.

Die Zeichnungen zeigen

Figur 1a ein flexibler Abschnitt eines Rohrs in einer mittleren Form,

Figur 1b einen flexiblen Abschnitt in einer gestauchten Form,

Figur 2a einen flexiblen Abschnitt eines Rohrs in einer mittleren Form,

Figur 2b einen flexiblen Abschnitt eines Rohrs in einer gedehnten Form,

Figur 3a einen flexiblen Abschnitt eines Rohrs,

Figur 3b einen flexiblen Abschnitt eines Rohrs im Querschnitt,

Figur 4a ein Rohr mit mehreren flexiblen Abschnitten,

Figur 4b eine Schnittansicht eines flexiblen Abschnitts,

Figur 5a eine weitere Ausführungsform eines Rohres mit mehreren flexiblen Abschnitten,

Figur 5b eine Schnittansicht eines flexiblen Abschnitts,

Figur 6a eine weitere Ausführungsform eines Rohres mit mehreren flexiblen Abschnitten,

Figur 6b einen flexiblen Abschnitt in einer vergrößerten Darstellung,

Figur 6c einen flexiblen Abschnitt in einer schematischen Schnittdarstellung,

Figur 7a eine weitere Ausführungsform eines Rohres mit mehreren flexiblen Abschnitten,

Figur 7b ein flexibler Abschnitt in vergrößerter Darstellung,

Figur 7c ein flexibler Abschnitt in schematischer Schnittdarstellung,

Figur 8a eine weitere Ausführungsform eines Rohres mit mehreren flexiblen Abschnitten,

Figur 8b eine vergrößerte Darstellung eines flexiblen Abschnitts,

Figur 8c eine schematischen Schnittdarstellung eines flexiblen Abschnitts,

Figur 9a eine Ausführungsform mit mehreren flexiblen Abschnitten,

Figur 9b eine vergrößerte Darstellung eines flexiblen Abschnitts,

Figur 9c eine schematische Schnittdarstellung eines flexiblen Abschnitts,

Figur 10a eine Ausführungsform eines Rohres mit flexiblen Abschnitt,

Figur 10b eine schematische Schnittdarstellung des flexiblen Abschnitts,

Figur 11a eine Ausführungsform eines Rohres mit flexiblen Abschnitt,

Figur 11b eine vergrößerte Darstellung des starren Abschnitts des Rohres,

Figur 11c eine schematische Schnittdarstellung des starren Abschnitts,

Figur 12a eine Schnittdarstellung eines Rohres mit mehreren flexiblen Abschnitten,

Figur 12b eine vergrößerte Darstellung eines flexiblen Abschnitts,

Figur 12c eine schematische Schnittdarstellung eines flexiblen Abschnitts,

Figur 13a ein flexibler Abschnitt in einem freien Zustand,

Figur 13b der flexible Abschnitt in einem komprimierten Zustand.

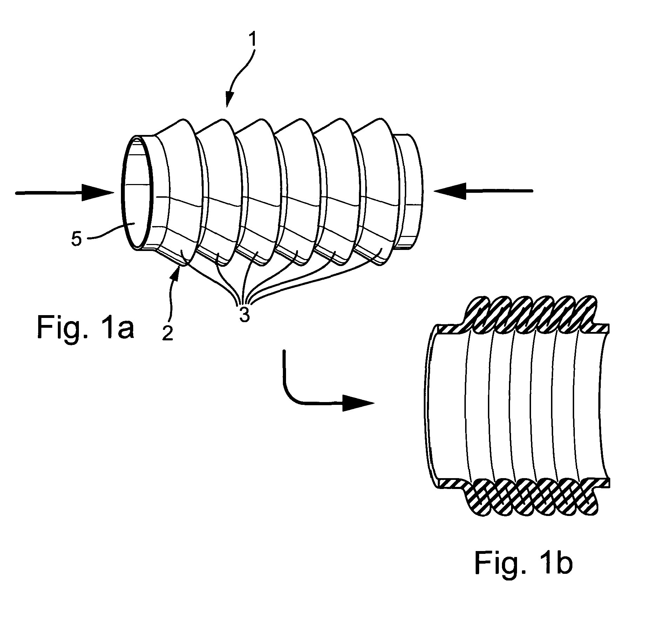

Figur 1a zeigt einen flexiblen Abschnitt eines Rohres 1, wie z.B. eines Rohres zur Führung von Fluiden mit einem niedrigen Druck. Das Rohr 1 ist einstückig aus Kunststoff ausgeformt und weist mindestens einen flexiblen Abschnitt 2 auf, der mit einem oder mehreren Rohrdurchmessermaxima 3 ausgestattet ist. Diese Rohrdurchmessermaxima 3 sind durch Rohrdurchmesserminima 4 (hier nicht gezeigt) benachbart. Durch die Öffnung 5 des Rohres 1 kann ein Fluid geleitet werden. Ein solches Rohr kann zum Beispiel einfach und preiswert mittels eines Spritzgußverfahrens hergestellt werden.

Wird nun der flexible Abschnitt 2 entsprechend den Pfeilen gedrückt, so nimmt der flexible Abschnitt 2 die Form, wie sie in der Figur 1b gezeigt ist an. Dabei rücken die Rohrdurchmessermaxima näher aneinander und der flexible Abschnitt wird durch sich selbst in dieser Position fixiert.

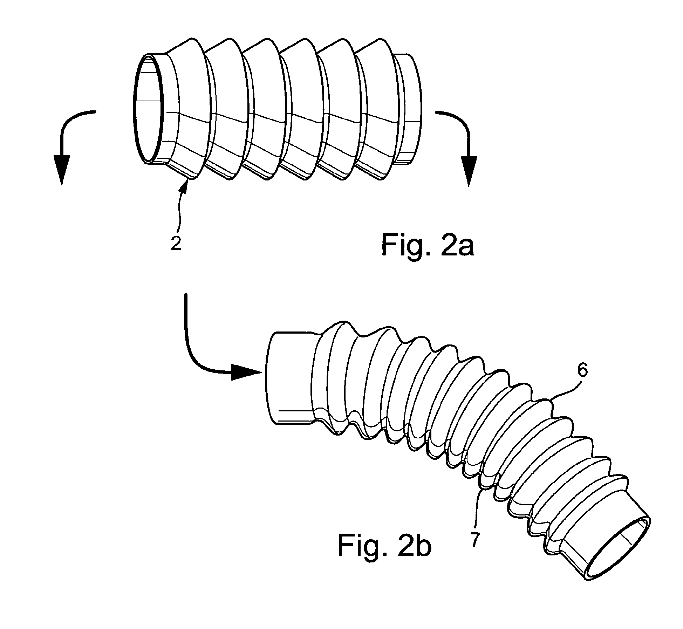

Figur 2 zeigt einen flexiblen Abschnitt 2 eines Rohrs 1 in einem freien Zustand. Dabei kann der flexible Abschnitt 2 entlang der Pfeile gebogen werden, so dass der flexible Abschnitt 2 die Form annimmt, wie in der Figur 2b gezeigt ist. Auch in dieser Form ist der flexible Abschnitt durch sich selbst fixiert. Dies geschieht zum Beispiel indem die Abschnitte zwischen den Rohrdurchmessermaxima 3 und den Rohrdurchmesserminima 4 eine gewisse Spannung aufweisen. Diese Spannung kann z.B. für jeden Punkt auf dem Rohrumfang zwei verschiedene Spannungsminima aufweisen. Eine Stellung, bei der die zwei benachbarten Rohrdurchmessermaxima 3 weiter entfernt sind und eine Stellung bei der die zwei benachbarten Rohrdurchmessermaxima 3 näher zueinander angeordnet sind. Da der eine Punkt 6 sich zum Beispiel in dem Spannungsminimum befindet, bei dem die beiden Rohrdurchmessermaxima 3 weiter auseinander sind und der gegenüberliegende Punkt 7 sich in dem anderen Spannungsminimum befindet, krümmt sich der flexible Abschnitt in Richtung 7. Da es sich in beiden Fällen um eine Spannungs- und/oder Energieminimum handelt, wird der flexible Abschnitt in dieser Stellung gehalten.

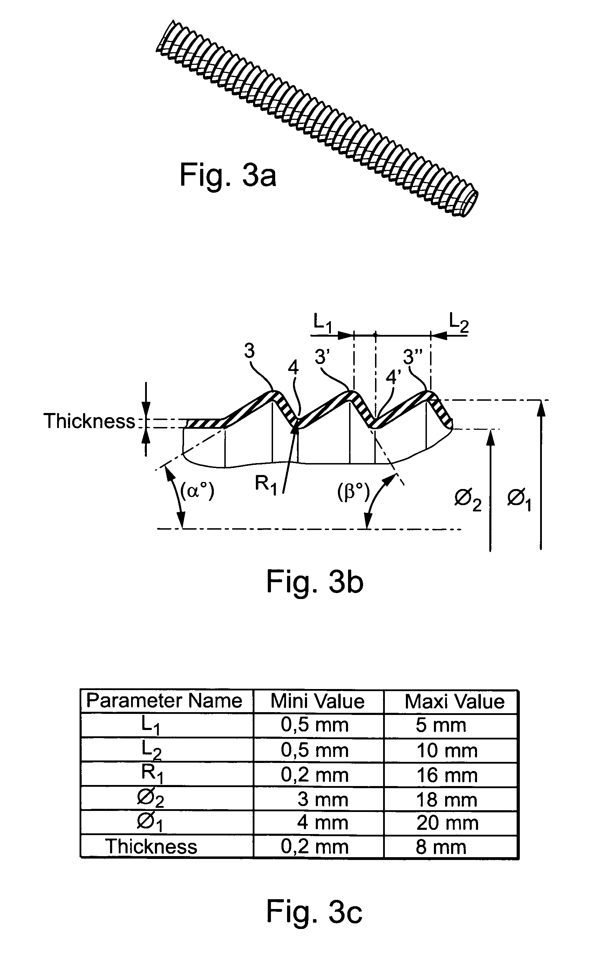

Figur 3a zeigt ein Rohr 1, das ganz als flexibler Abschnitt 2 ausgebildet ist. Dieses Rohr 1 kann also an allen Stellen gekrümmt und gezogen bzw. gestaucht werden. Figur 3b zeigt eine schematische Schnittansicht des flexiblen Abschnitts 2. Dabei sind drei Rohrdurchmessermaxima 3, 3' und 3" und zwei Rohrdurchmesserminima 4 und 4' gezeigt. Die Rohrdurchmesserminima 4 und 4' sind jeweils zu den Rohrdurchmessermaxima 3 benachbart. Die Verbindungen zwischen den Rohrdurchmesserminima 4 und den Rohrdurchmessermaxima 3 (L2) und den Rohrdurchmessermaxima 4 und den Rohrdurchmesserminima 4 (L1) können dabei verschieden groß sein, so dass eine asymmetrische Ausformung entsteht. Die möglichen Parameter sind dabei in der Tabelle 3c angegeben.

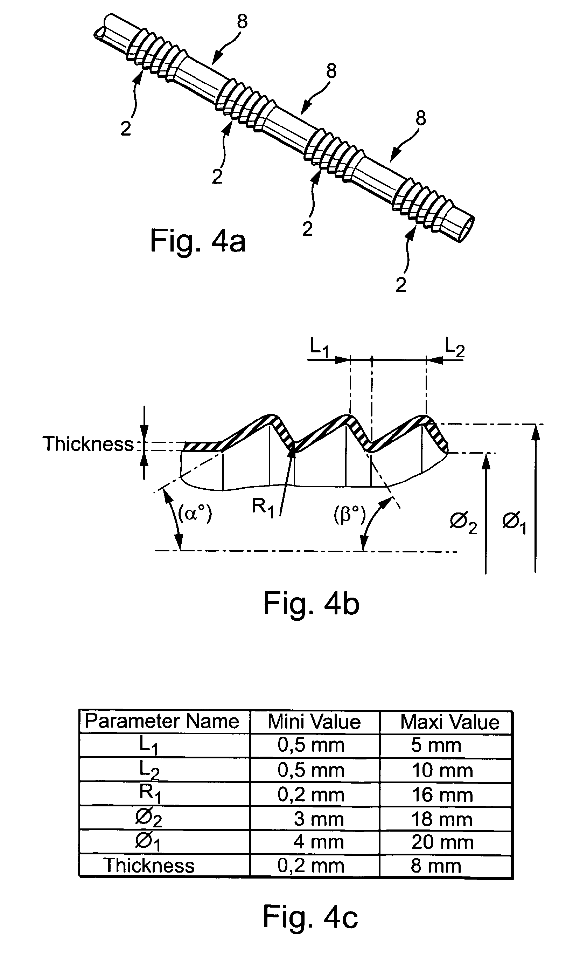

Figur 4 zeigt ein Rohr 1 mit mehreren flexiblen Abschnitten 2 und mehreren starren Abschnitten 8. Das Rohr 1 wird also vorzugsweise an den Abschnitten 2 gebogen oder gezogen bzw. gestaucht. Figur 4b zeigt eine schematische Schnittzeichnung. Die Größen für die einzelnen Dimensionierungen sind in der Tabelle 4 c angegeben.

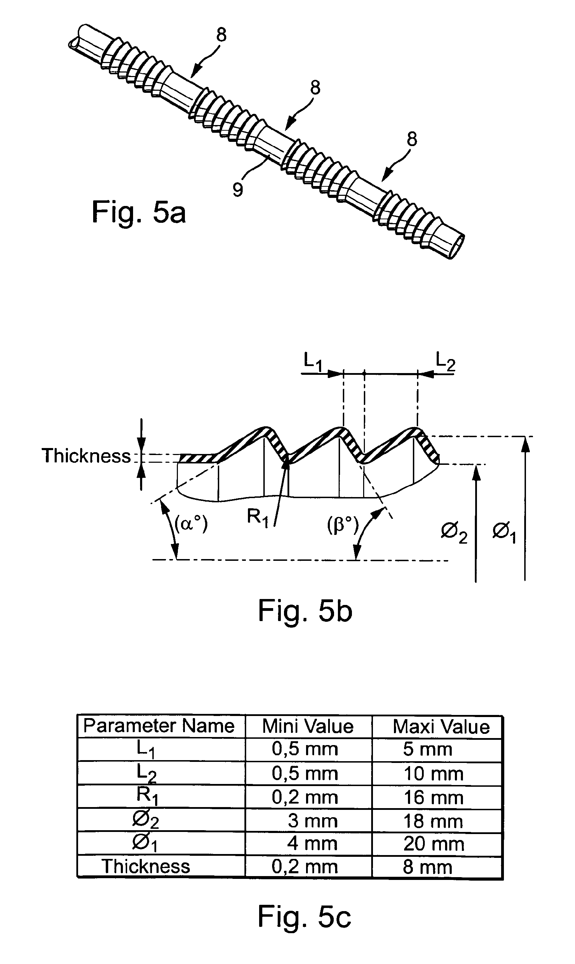

Figur 5 zeigt ein Rohr 1 deren starre Abschnitte 8 Rippen 9 aufweist. Die Rippen 9 erstrecken sich dabei entlang des starren Abschnitts parallel zur Längsachse und können aus dem gleichen Material, wie der übrige starre Abschnitt ausgebildet sein. Solche Rippen 9 können zum Beispiel verwendet werden um die starren Abschnitte verwindungssteifer zu gestalten. Vorzugsweise werden das gesamte Rohr 1, also mit den starren und den flexiblen Abschnitten als Gesamtheit gefertigt, vorzugsweise gespritzt oder gegossen. Figur 5b zeigt eine schematische Darstellung einer Schnittansicht eines flexiblen Abschnitts 2 des Rohrs 1.

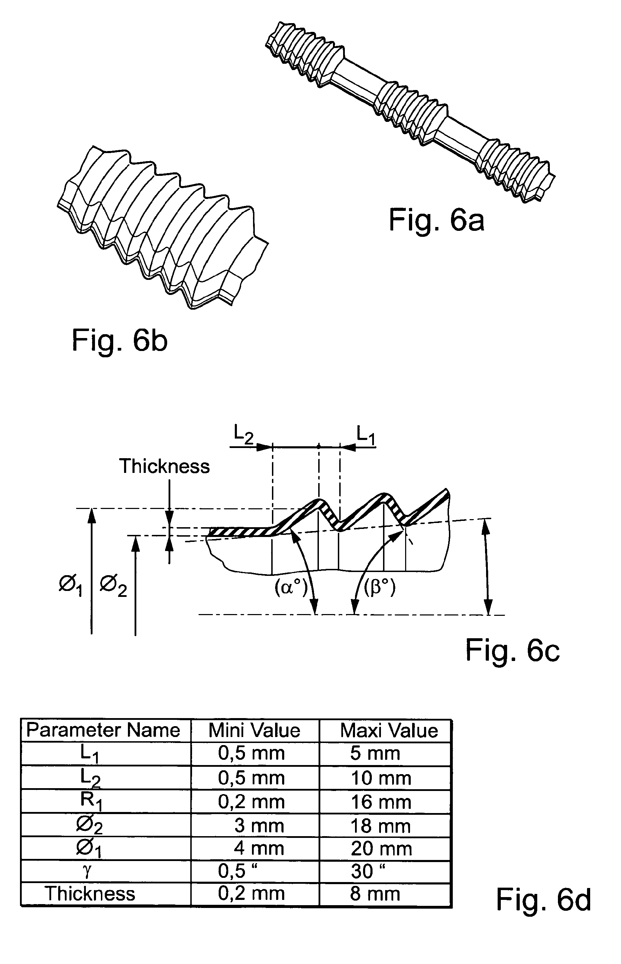

Figur 6 zeigt ein Rohr 1 mit mehreren flexiblen Abschnitten 2. Die flexiblen Abschnitte 2 weisen dabei Rohrdurchmessermaxima 4 auf, deren Rohrdurchmesser entlang der Längsachse des Rohrs ansteigt. Das auf ein Rohrdurchmessermaximum folgende Rohrdurchmessermaximum ist also größer als das erstere. Das entsprechende gilt für die Rohrdurchmesserminima, so dass der Rohrdurchmesser am einen Ende des flexiblen Abschnitts größer ist als am anderen Ende des flexiblen Abschnitts. Figur 6b zeigt dies in einer vergrößerten Darstellung. Figur 6c zeigt dies in einer schematischen Schnittdarstellung. Hier ist auch der gerade Verlauf des starren Abschnitts 8 gezeigt, dem gegenüber die fiktive (gestrichelte) Verbindungslinie zwischen den Rohrdurchmesserminima einen Winkel ungleich 180° einschließt. Die Werte für die Parameter der gezeigten Schnittansicht in Figur 6c sind in der Tabelle 6d aufgeführt.

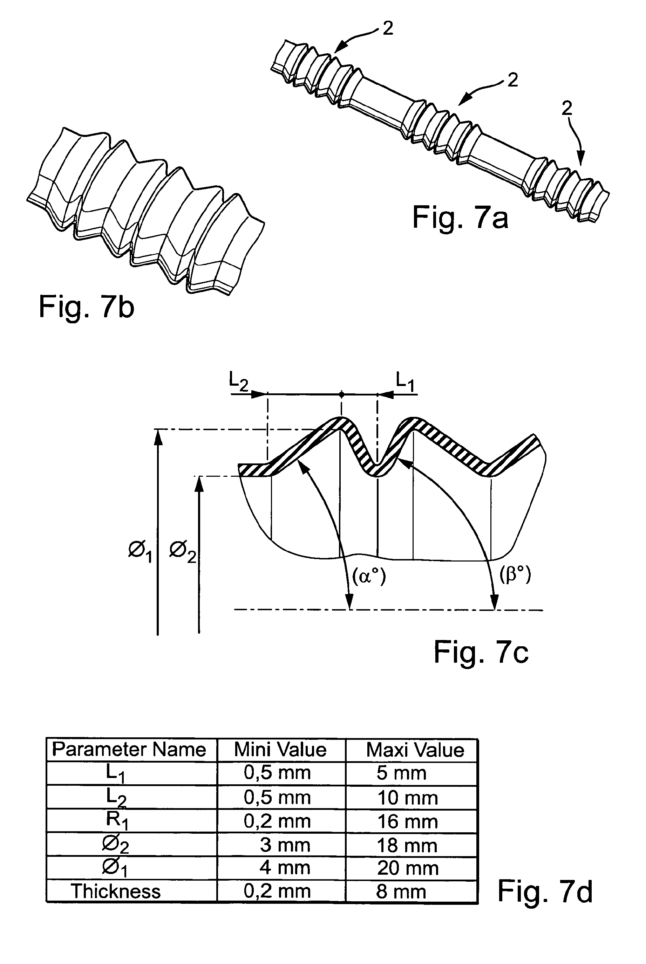

Figur 7 zeigt eine weitere Ausführungsform. Das Rohr 1 weist entsprechend Figur 7a mehrere flexible Abschnitte 2 auf. Diese Abschnitte sind wiederum als eine Folge von Rohrdurchmessermaxima 4 und Rohrdurchmesserminima 3 ausgeführt. Hierbei sind jedoch die Verbindungsstücke zwischen den Maxima 4 und den Minima 5 so ausgebildet, dass immer zwei auf einander folgende Stücke dieselbe Länge (L1) aufweisen, während das darauf folgende Stückpaar eine von L1 unterschiedliche Länge (L2) hat. Dies zeigt die Figur 7b in der Vergrößerung und Figur 7c als schematische Schnittdarstellung. Mögliche Werte für die in der Schnittdarstellung angegebenen Parameter enthält die Tabelle 7d.

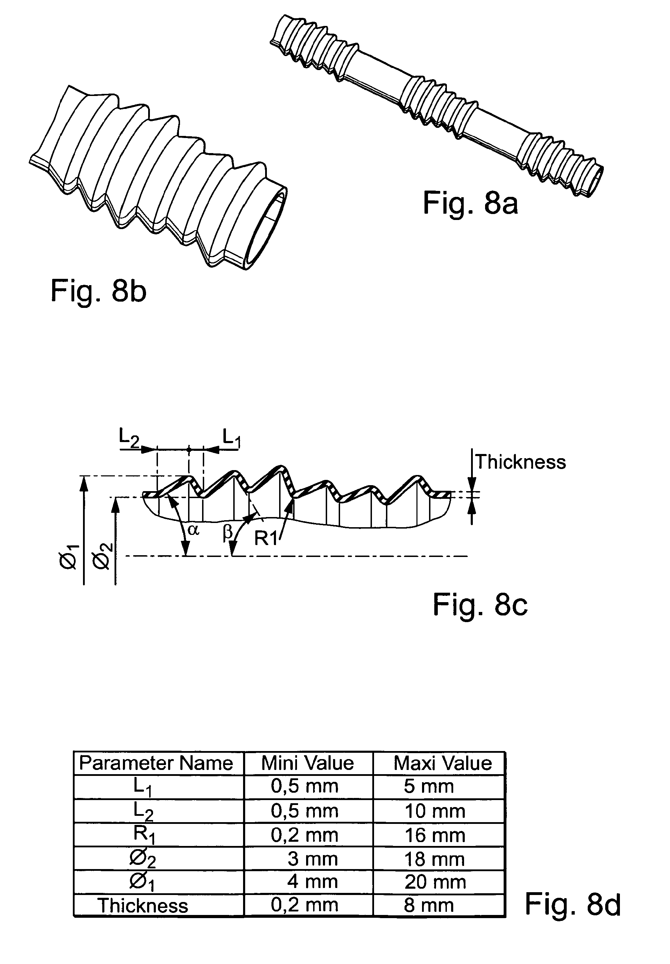

Eine weitere Ausführungsform ist in Figur 8 dargestellt. Figur 8a zeigt dabei ein Rohr 1 mit mehreren flexiblen Abschnitten 2. Einer der flexiblen Abschnitte 2 ist vergrößert in der Figur 8b dargestellt. Wie auch in der schematischen Schnittdarstellung des flexiblen Abschnitts 2 in der Figur 8c gezeigt, weisen die Rohrdurchmessermaxima 4 verschiedene Größen auf. Dies gilt auch für die Rohrdurchmesserminima 3. Die Werte der in Figur 8c dargestellten Parameter können aus Tabelle 8d entnommen werden.

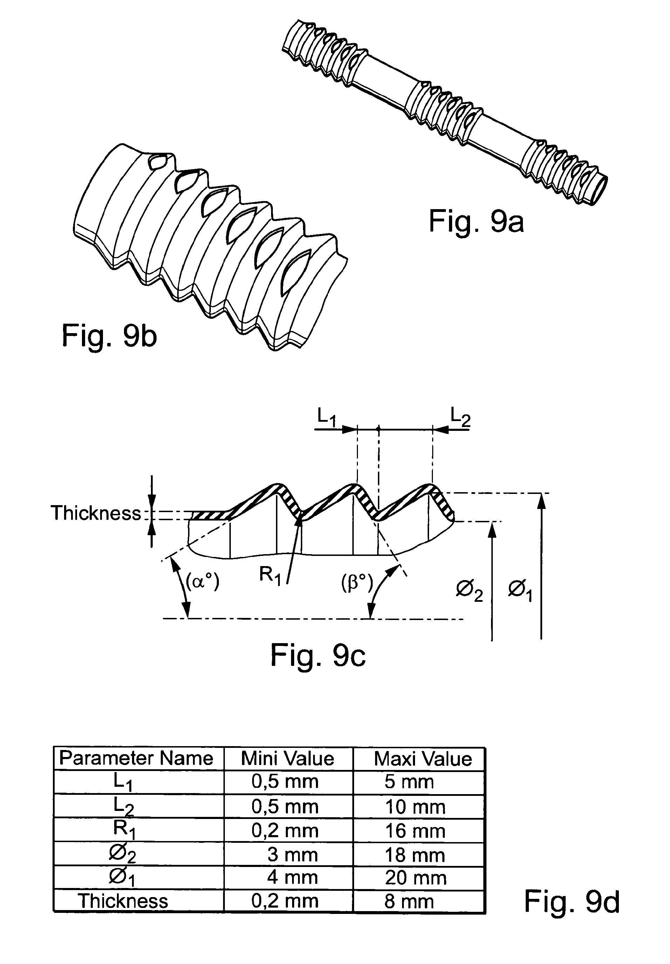

Figur 9 zeigt die Möglichkeit ein Rohr 1 mit mindestens einen flexiblen Abschnitt 2 entlang der Längsachse in sich zu verwinden. Dazu sind in Figur 9b Teile des flexiblen Abschnitts farblich markiert, um die Verwindung zu kennzeichnen. Auch ist es möglich, dass der flexible Abschnitt so konstruiert wird, dass der Abschnitt in einer solchen Stellung von selbst verbleibt.

Auch hier sind mögliche Werte für die, in der Schnittdarstellung aufgeführten Parameter in der Tabelle 9d gezeigt.

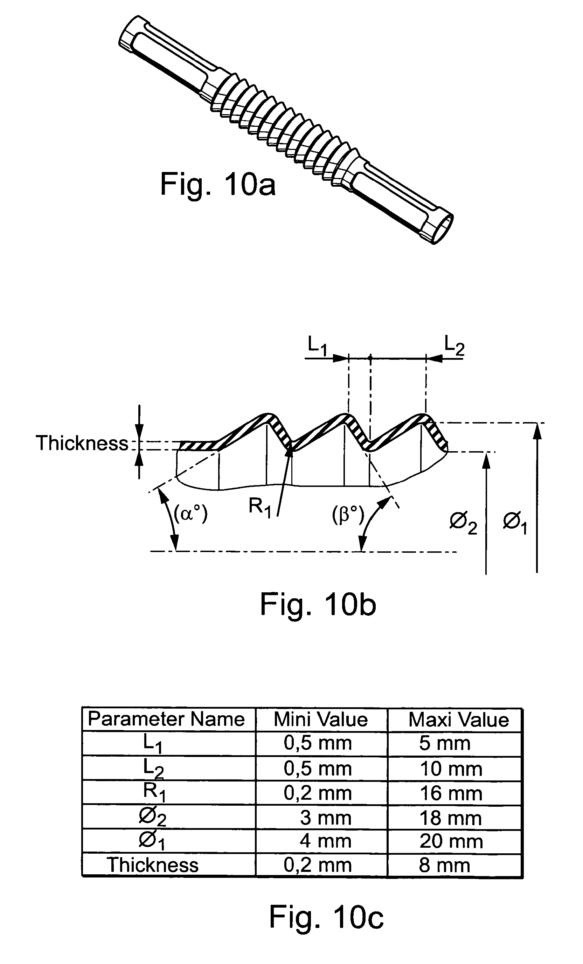

Figur 10 zeigt ein Rohr 1 mit einem flexiblen Abschnitt 2. Die starren Abschnitte des Rohrs haben dabei Rippen ausgebildet, die z.B. zur Versteifung dienen. Figur 10b zeigt in einer Schnittdarstellung den flexiblen Abschnitt 2, wobei mögliche Werte für die in der Zeichnung angegebenen Parameter in der Tabelle 10c gezeigt sind.

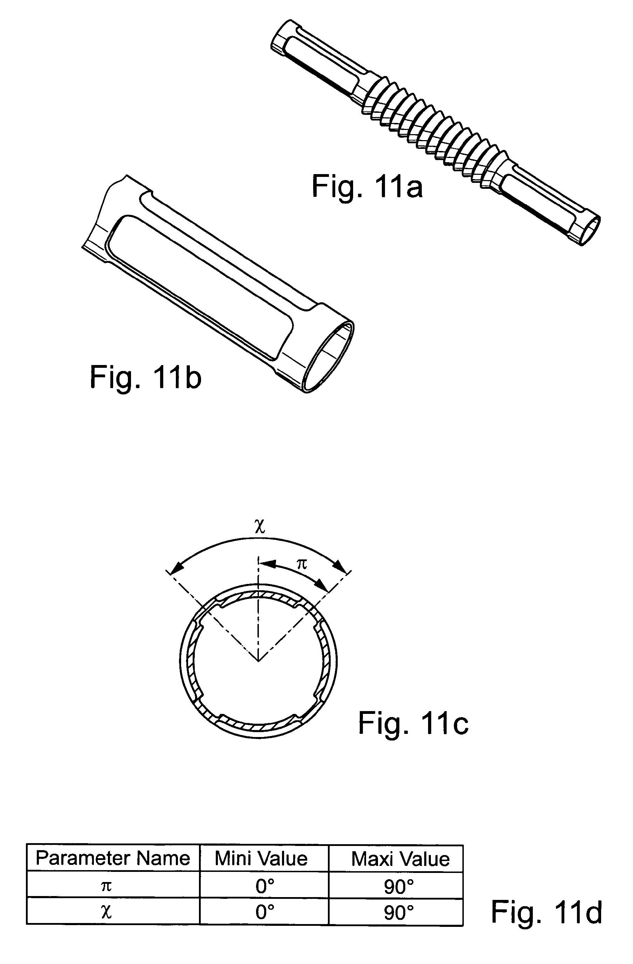

Figur 11a zeigt das Rohr aus Figur 10, wobei die Rippen in Figur 11b vergrößert dargestellt sind. Figur 11c ist eine schematische Schnittdarstellung des starren Abschnitts. Werte für die in Figur 11c benannte Parameter ist in Tabelle 11d aufgeführt.

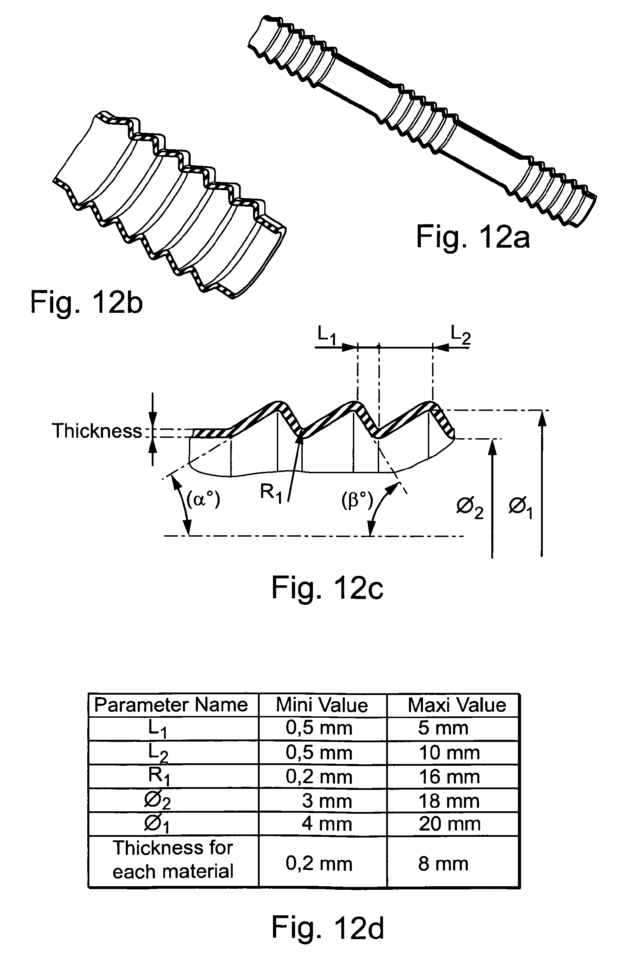

In Figur 12 wird dargestellt, dass ein Rohr 1 aus bis zu 4 verschiedenen Materialien hergestellt werden kann. Die Materialien werden dabei als Schicht übereinander gelegt. Figur 12a zeigt dabei eine Schicht aus einem Material. Figur 12b zeigt eine vergrößerte Darstellung einer solchen Schicht, wie sie auch schematisch in Figur 12c dargestellt ist. Die Werte für die in Figur 12c dargestellten Parameter sind in Tabelle 12d gezeigt.

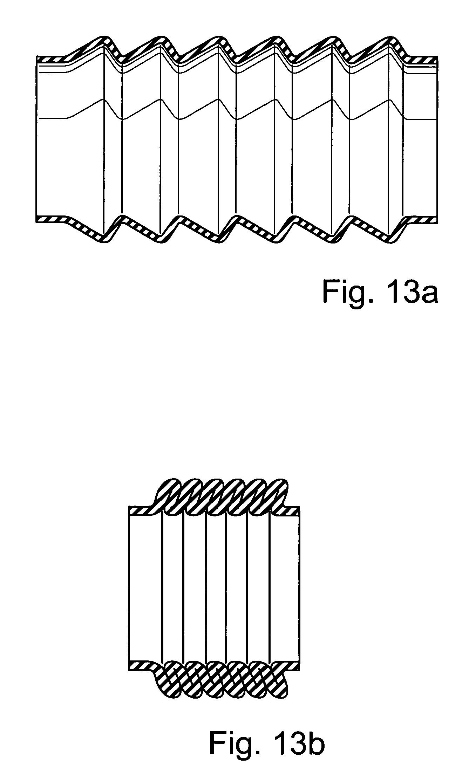

Figur 13 zeigt die Kompression eines flexiblen Abschnitts 2. Dabei zeigt 13a den Abschnitt in einem unkomprimierten, 13b in einem komprimierten Zustand.

### Bezugszeichenliste

1 Rohr
2 flexibler Abschnitt
3 Rohrdurchmessermaximum
4 Rohrdurchmesserminimum
5 Rohröffnung
6 Punkt des flexiblen Abschnitts
7 Punkt des flexiblen Abschnitts
8 starrer Abschnitt des Rohrs
9 Rippe

## Patentansprüche

1. Rohr zum Leiten eines Fluids umfassend mindestens einen flexiblen Abschnitt **dadurch gekennzeichnet, dass** der mindestens eine flexible Abschnitt aufgrund seiner Form in mehreren verschiedenen Positionen ohne Krafteinwirkung von außen verbleiben kann.

2. Rohr nach einem der vorangegangenen Ansprüche **dadurch gekennzeichnet, dass** der flexible Abschnitt verschieden große Rohrdurchmesser aufweist.

3. Rohr nach einem der vorangegangenen Ansprüche, **dadurch gekennzeichnet, dass** der flexible Abschnitt mindestens ein Rohrdurchmessermaximum aufweist.

4. Rohr nach dem vorangegangenen Anspruch, **dadurch gekennzeichnet, dass** der flexible Abschnitt mehrere Rohrdurchmessermaxima aufweist, die durch ein mindestens ein Rohrdurchmesserminimum getrennt sind.

5. Rohr nach dem vorangegangenen Anspruch, **dadurch gekennzeichnet, dass** mindestens zwei der Rohrdurchmessermaxima den gleichen Rohrdurchmesser aufweisen.

6. Rohr nach einem der vorangegangenen Ansprüche, **dadurch gekennzeichnet, dass** mindestens zwei der Rohrdurchmesserminima den gleichen Rohrdurchmesser aufweisen.

7. Rohr nach einem der vorangegangenen Ansprüche, **dadurch gekennzeichnet, dass** mindestens zwei aufeinander folgende Strecken zwischen einem Rohrdurchmessermaximum und einem Rohrdurchmesserminimum verschieden lang sind.

8. Rohr nach einem der vorangegangenen Ansprüche **dadurch gekennzeichnet, dass** der mindestens eine flexible Abschnitt gestreckt und verkürzt werden kann.

9. Rohr nach einem der vorangegangenen Ansprüche **dadurch gekennzeichnet, dass** der mindestens eine flexible Abschnitt um seine Längsachse verwunden werden kann.
